# EUROPEAN PATENT APPLICATION

(11) **EP 4 725 774 A1**
(43) Date of publication of application: **15.04.2026**
(21) Application number: 25200209.2
(22) Date of filing: 04.09.2025
(51) Int. Cl.: B60R 21/0134, A41D 13/018

(54) **PHYSICAL COLLISION PROTECTION**

(30) Priority: 08.10.2024 US 202418909878
(71) Applicant: NXP B.V., 5656 AG Eindhoven (NL)
(72) Inventor: Terechko, Andrei Sergeevich, 5656 AG Eindhoven (NL); Fu, Yuting, 5656 AG Eindhoven (NL); Schuerman, Cornelis Pieter, 5656 AG Eindhoven (NL)
(74) Representative: Schmütz, Christian Klaus Johannes

(57) **Abstract**

One example discloses a protection device, including: a wireless receiver; wherein the wireless receiver is configured to receive a command from a monitoring device; a protection element configured to be coupled to a first physical structure; wherein the monitoring device includes a sensor configured to predict a physical collision between the first physical structure and a second physical structure; wherein the monitoring device is configured to transmit the command in response to predicting the physical collision; a controller coupled to the wireless receiver and the protection element; wherein the controller is configured to activate the protection element in response to receiving the command; and wherein upon activation, the protection element is physically positioned between the first physical structure and the second physical structure.

## Description

The present specification relates to systems, methods, apparatuses, devices, articles of manufacture and instructions for physical collision protection.

### SUMMARY

According to an example embodiment, a protection device, comprising: a wireless receiver; wherein the wireless receiver is configured to receive a command from a monitoring device; a protection element configured to be coupled to a first physical structure; wherein the monitoring device includes a sensor configured to predict a physical collision between the first physical structure and a second physical structure; wherein the monitoring device is configured to transmit the command in response to predicting the physical collision; a controller coupled to the wireless receiver and the protection element; wherein the controller is configured to activate the protection element in response to receiving the command; and wherein upon activation, the protection element is physically positioned between the first physical structure and the second physical structure.

In another example embodiment, the controller is configured to unconditionally activate the protection element in response to the command.

In another example embodiment, immediately upon receipt, by the wireless receiver and the controller, the command activates the protection element.

In another example embodiment, activation of the protection element only requires receipt of the command from the wireless receiver.

In another example embodiment, the command to activate the protection element overrides any other command received by either the wireless receiver or the controller from any other device.

In another example embodiment, the monitoring device is only embedded in the second physical structure.

In another example embodiment, the second physical structure is physically moving toward the first physical structure.

In another example embodiment, the monitoring device is configured to transmit the command only if the physical collision is certain or unavoidable.

In another example embodiment, the protection device is configured to authenticate the monitoring device before permitting the command to activate the protection element.

In another example embodiment, the protection device and the monitoring device are unpaired before the authenticate.

In another example embodiment, further comprising an additional set of physical structures each having their own individual protection element; wherein the monitoring device is configured to identify a first sub-set of the additional set of physical structures that are at risk for a physical collision with the second physical structure.

In another example embodiment, the monitoring device is configured to transmit the command to a second subset of the additional set of physical structures, if the sensor determines that the physical collision between the second physical structure and the second subset of the additional set of physical structures is unavoidable.

In another example embodiment, the command directly activates the individual protection elements of only the second subset of the additional set of physical structures.

In another example embodiment, the monitoring device is configured to transmit a warning to only the first physical structure and the first sub-set of the additional set of physical structures; and the second sub-set is within the first sub-set.

In another example embodiment, the first physical structure is a person; and the protection element includes an airbag coupled to the person.

In another example embodiment, the first physical structure is at least one of: a person, a baby-seat, an animal, a door, a building, a wall, a smart-home, a vehicle, a bicycle, a motorcycle, fragile equipment, valuable artwork, a robot, road infrastructure, or a platform.

In another example embodiment, the second physical structure is at least one of: a vehicle or a building structure.

In another example embodiment, the protection element is at least one of: a kinetic energy absorbing structure, a physically deformable structure, an airbag, a cushion; or an energy field.

According to an example embodiment, a monitoring device, comprising: a set of sensors configured to predict a physical collision between a first physical structure and a second physical structure; wherein the first physical structure includes a protection element; wherein the monitoring device is configured to transmit a command in response to predicting the physical collision that will activate the protection element; and wherein upon activation, the protection element is physically between the first physical structure and the second physical structure.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figure 1 represents a first example system for activating a protection element within a protection device.
Figure 2 represents a second example system for activating the protection element within the protection device.
Figure 3 represents an example timeline for activating the protection element.
Figure 4 represents an example messaging exchange for activating the protection element.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the scope of the appended claims are covered as well.

### DETAILED DESCRIPTION

Physical collisions involving vulnerable physical structures, such as people, bicyclists, motorcyclists, pedestrians, fragile but rare or valuable items (e.g. artwork), sensitive electrical equipment, and the like can result in very costly outcomes.

One specific example of such costly physical collisions is between a vehicle (e.g. a car) and a vulnerable road user (VRU) (e.g. a bicyclist).

Vehicle-to-cyclist collisions are highly hazardous even when the cyclist has airbags integrated in their bike or clothing (e.g. helmet). While airbags can boost protection of such cyclists, they are reactive and require self-activation (e.g. such airbags don't help with a first collision/impact because the airbags require the actual first collision/impact to occur (e.g. perhaps using accelerometers).

Some V2X (i.e. vehicle to everything) systems may send out a warning message, however such message still requires the cyclist's protection equipment to have enough costly computer processing power to not only decode the warning message, but to poll it's own sensors, and decide how to react to such a warning message.

Now discussed are example embodiments of various physical collision protection devices that can wirelessly activate a vulnerable physical structure's (e.g. a VRU's) protective elements prior to any physical collision with another physical structure (e.g. a car), even if for example the VRU and the car have never encountered each other before and are not paired in any way.

These physical collision protection devices have an asymmetric architecture. This asymmetric architecture is herein defined as including example embodiments where one or more protection elements in the physical collision protection device is activated solely by a wireless message sent by a remote monitoring device.

In some example embodiments, the monitoring device is embedded in a vehicle that is about to collide with a VRU. In such embodiments, it would be relatively easy and of incremental cost to re-purpose many of the vehicle's existing sensors and computers to perform object tracking (e.g. looking for VRUs) and collision prediction. Thus the VRU could have a relatively low-tech and simple circuit designed only to receive the wireless activation command and a protection element (e.g. airbag) to be activated in response to the wireless command and thereby protect the vulnerable road user (VRU). Such a relatively low-tech and simple circuit could thus be inexpensively deployed in a great many applications to protect vulnerable physical structures, such as people, bicyclists, motorcyclists, pedestrians, etc. from a dangerous car collision.

Such wireless airbag activation would also occur before any collision between the vehicle and VRU, and thus provide protection before the very first impact with the vehicle. This is proactive instead of reactive.

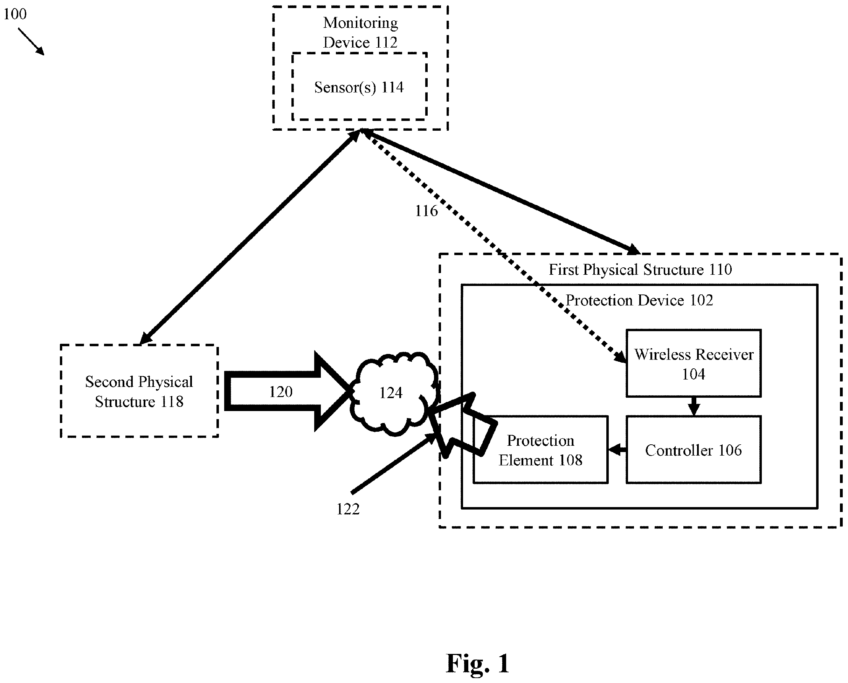

Figure 1 represents a first example system 100 for activating a protection element 108 within a protection device 102. The system 100 shows a protection device 102 having a wireless receiver 104, a controller 106, and a protection element 108. The protection device 102 is embedded in a first physical structure 110 (e.g. coupled to any of the vulnerable physical structures introduced above).

The system 100 further shows a monitoring device 112 having a sensor 114, or a set of sensors, and is configured to generate a command 116 if a second physical structure 118 is about to have a physical collision 120 with the first physical structure 110.

The command 116 is received by the wireless receiver 104, is immediately sent to the controller 106, which then in turn immediately translates the command 116 into one or more electrical control signals that activate the protection element 108. The activated protection element 108 then deploys a structure (e.g. an airbag, a kinetic energy absorbing structure, a physically deformable structure, a cushion, an energy field (e.g. magnetic), or the like) which is physically positioned between 124 the first physical structure 110 and the second physical structure 118, thus avoiding the physical collision 120.

In some example embodiments, the monitoring device 112 is embedded in the second physical structure 118 (e.g. embedded within a vehicle about to collide with the VRU), while in other example embodiments the monitoring device 112 is embedded another platform such as a traffic signal pole at a cross-walk, or in a wall within a smart-home.

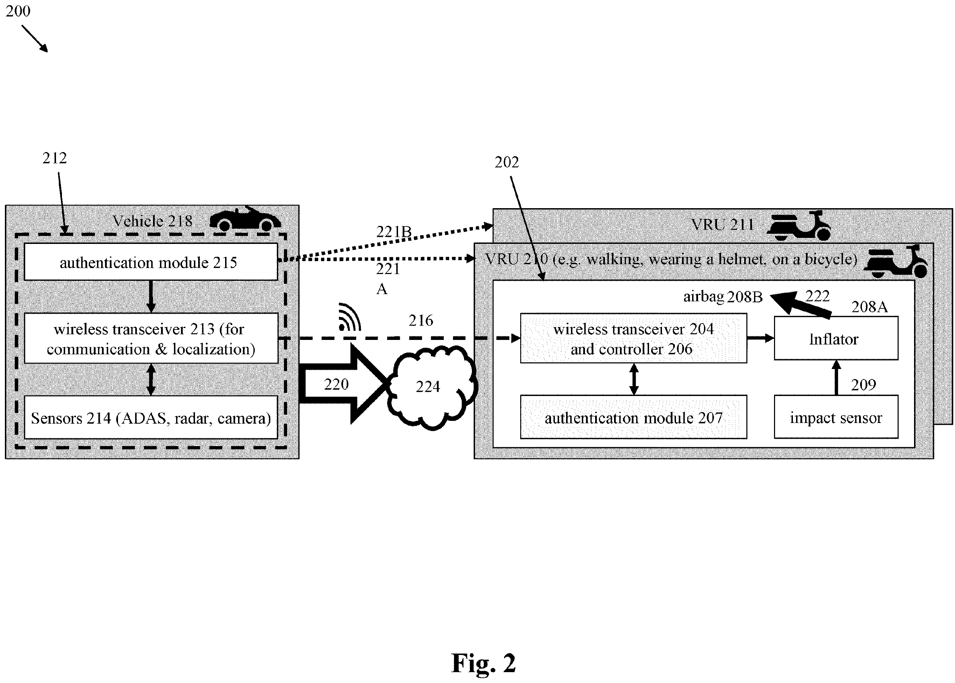

Figure 2 represents a second example system 200 for activating the protection element 208A, 208B within the protection device 202. The system 200 shows a protection device 202 having a wireless transceiver 204, a controller 206, an authentication module 207, a protection element (i.e. inflator 208A, airbag 208B), and an impact sensor 209. The protection device 202 is embedded in or on a first physical structure 210 (e.g. a VRU that is walking, wearing a helmet, on a bicycle, etc.). Duplicates of the protection device 202 can be embedded in or on additional physical structures, such as VRU 211.

The system 200 further shows a monitoring device 212 having a wireless transceiver 213, a set of sensors 214, an authentication module 215, and is configured to generate a command 216 if a second physical structure 218 (e.g. a vehicle in which the monitoring device 212 is embedded) is about to have a physical collision 220 with the first physical structure 210.

The wireless transceivers 204, 213 can be based on WiFip, UWB, LTE-V2X, or other point-to-point wireless communication technologies. In some example embodiments, the wireless transceivers 204, 213 are not only used for communications, but also help with sensing and localizing a set of VRUs 210, 211. In various example embodiments, the vehicle's 218 existing UWB sensors for car access, can fulfill all three of these roles.

Since the monitoring device 212 in this example 200 is embedded in the vehicle 218, the sensors 214 can be the vehicle's 218 existing ADAS environment perception sensors (e.g., radar, ultrasonic, camera, UWB transceivers) for detecting VRUs 210, 211. Alternatively or additionally, the vehicle 218 may receive V2X information from road infrastructure share information on presence on a type, location, motion, etc. of VRUs.

With the monitoring device 212 embedded in the vehicle 218, a VRU's protection device 202 can be very simple and low cost (e.g. needs only a wireless receiver, a controller, and a protection element). Similarly if the monitoring device 212 is embedded in a smart-home, then various protection devices worn by a vulnerable physical structure (e.g. a person) can also be very simple, low cost, and light.

The monitoring device 212 regularly attempts to identify a set of VRUs that are at risk of a physical collision.

In examples where there is both time before an actual physical collision 220 and a level of trust is needed to prevent hacking, the authentication modules 207, 215 implement an authentication protocol (e.g. using authentication messages 221A, 221B). The authentication protocol prevents hackers from improperly activating a VRU's protection element (i.e. inflator 208A, airbag 208B) and establishes trust with the protection device 202. Such authentication can be very important since in many physical collision scenarios, both the vehicle 218 and the VRUs 210, 211 are "unknown" to each other and were not paired in advance.

The authentication module's 207, 215 messages can be encrypted for privacy in some applications. An example authentication protocol would include a relatively slow negotiation using asymmetric keys, followed by a fast symmetric key communication for the encrypted airbag activation command. An asymmetric key, where each agent has a private and public key, is a "slower" protocol, while a symmetric key, where only "one key/agent person" must be "shared" is a "faster" protocol.

In other examples (e.g. a smart-home) where there may be little time before an actual physical collision 220 (e.g. a person in their own home and about to fall on a floor, fall down steps, walk into a door, etc.) and a level of trust is not as needed (e.g. since it is in the person's own home), then authentication is not as required.

As time progresses, the monitoring device 212 then makes a determination if the physical collision 220 is unavoidable. Such an unavoidability calculation can be very computation intensive and in addition the vehicle 218 often bigger and has a more complex shape than the VRU's protection device 202 (e.g. a helmet). Both the collision risk and unavoidability calculations require knowledge of the vehicle's 218 shape to identify potential collision points, while multiple VRU's protection devices 202 (e.g. helmets) can be easily modeled as spheres in such collision computations. Such complex computations are unlikely to be performed on a low-cost microcontroller within the VRU's protection devices 202, but could easily be computed on vehicle 218 with powerful ADAS modules.

While still at just the "risk" of the physical collision 220 time, the monitoring device 212 can in various example embodiments send out "warning messages" to the VRUs 210, 211 as well.

When the physical collision 220 is unavoidable, the command 216 to activate the protection element (i.e. inflator 208A, airbag 208B) is transmitted only to a sub-set of the VRUs (e.g. to VRU 210 and not VRU 211) that are truly at risk of the physical collision 220. Thus if collision is unavoidable, the vehicle 218 wirelessly sends the activation command 216 only to the VRU 210 that will be involved in the collision, leaving the protection elements (i.e. inflator 208A, airbag 208B) on other VRUs (e.g. 211) disengaged.

The command 216 is transmitted by the wireless transceiver 213 and received by the wireless receiver 204, is immediately sent to the controller 206, which then in turn immediately translates the command 216 into one or more electrical control signals that activate 222 the inflator 208B. The activated 212 inflator 208B then deploys the airbag 208B which is physically positioned between the first physical structure 210 and the second physical structure 218, thus avoiding the physical collision 220.

Activation of the protection element (i.e. inflator 208A, airbag 208B) before the physical collision 220 reduces damage to the VRU 210 caused by a first impact.

In some example embodiments, the VRUs 210, 211 even after receiving the command 216 to activate their protection elements (i.e. inflator 208A, airbag 208B), can make the "final call" on whether to activate their protection elements, perhaps using additional sensor (e.g. impact sensor 209), V2X information and/or information that a VRU is not even wearing their protection device 202 (e.g. a set of protection devices 202 are in a closet in a smart-home).

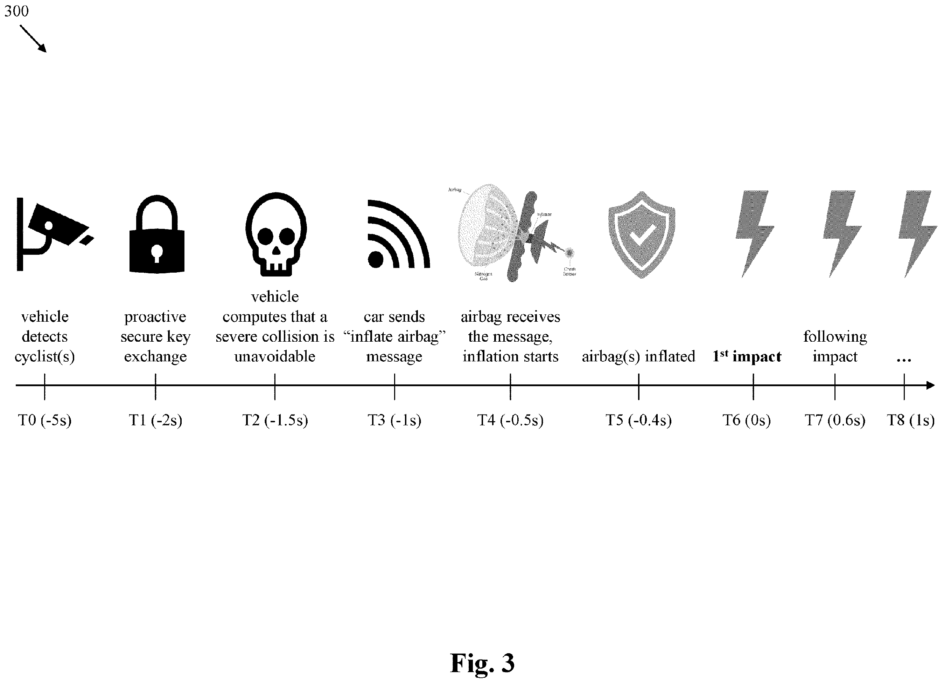

Figure 3 represents an example timeline 300 for activating the protection element 108, 208A, 208B.

At time T0 a vehicle detects multiple cyclists (e.g. VRUs), at time T1 a proactive secure key exchange occurs between the vehicle and the VRUs (e.g. the key exchange occurs even is no collision with these VRUs is predicted, just in case it is needed to trigger the protection at a later time), at time T2 the vehicle computes that a severe collision is unavoidable with one of the cyclists, at time T3 car sends an "inflate airbag" message only to that cyclist calculated to have the unavoidable collision, at time T4 that cyclist's airbag receives the message and airbag inflation starts, at time T5 before the actual collision, that cyclist's airbag is fully inflated, at time T6 that cyclist experiences a 1st impact with the vehicle, at time T7 that cyclist may experience a first following impact with either the vehicle or something else (e.g. the ground), and at time T8 that cyclist may experience a second following impact with another physical structure.

The example times given in seconds could be for an example application where the cyclists and cars are in a city environment and moving at reasonable speeds (e.g. cyclist speed: 18km/h (5m/s), human's perception time of a sudden obstacle: 250ms, human's brake enablement time: 250ms, braking time for cyclist: 1s or more, bicycle's stopping time: 1.5s or more, bicycle's stopping distance: 7.5m or more, and car takes longer to stop due to higher speed of 30km/h or more). In other example embodiments, different times can be selected for different types, or multiple types, of VRUs.

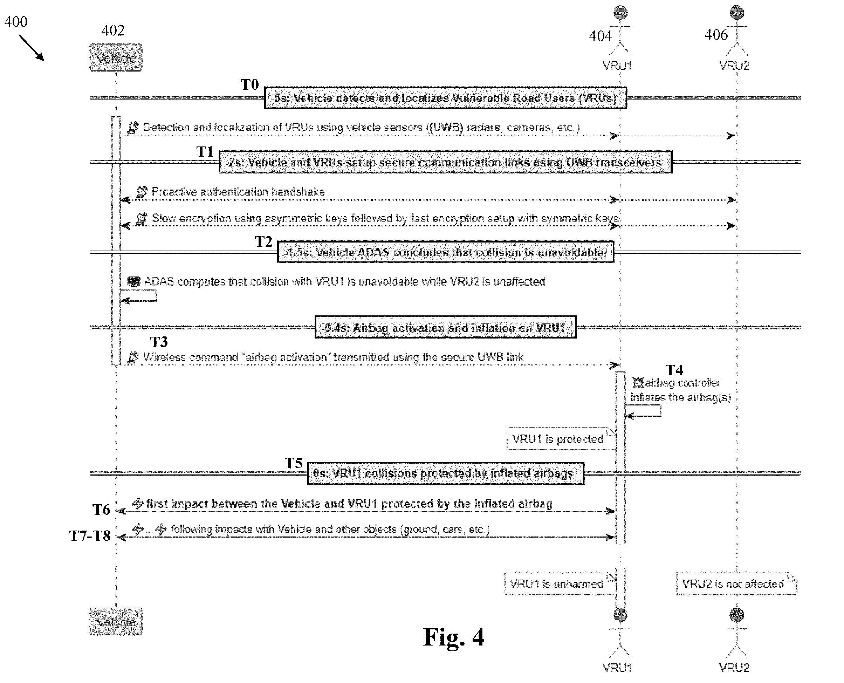

Figure 4 represents an example messaging exchange 400 for activating the protection element 108, 208A, 208B. The example 400 shows a vehicle 402 that may collide with VRU1 404 and/or VRU2 406.

Times T0, T1, T2, T3, T4, T5, T6, T7, T8 shown in the example 400 are functionally similar to those shown in Figure 3.

Note in this example, the command 116, 216 is only sent to VRU1 404 since at time T2 the vehicle's 402 ADAS system calculates that only VRU1 404 is at risk of an unavoidable collision with the vehicle 402.

In some example embodiments the functionality described above can be implemented as a set of software instructions stored in a non-transitory computer-readable or computer-usable medium. In other example embodiments, this functionality can be implemented using logic gates, application specific chips, firmware, and/or other hardware.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

## Claims

1. A protection device, comprising:
a wireless receiver;
wherein the wireless receiver is configured to receive a command from a monitoring device;
a protection element configured to be coupled to a first physical structure;
wherein the monitoring device includes a sensor configured to predict a physical collision between the first physical structure and a second physical structure;
wherein the monitoring device is configured to transmit the command in response to predicting the physical collision;
a controller coupled to the wireless receiver and the protection element;
wherein the controller is configured to activate the protection element in response to receiving the command; and
wherein upon activation, the protection element is physically positioned between the first physical structure and the second physical structure.

2. The device of claim 1:
wherein the controller is configured to unconditionally activate the protection element in response to the command.

3. The device of claim 1 or 2:
wherein immediately upon receipt, by the wireless receiver and the controller, the command activates the protection element.

4. The device of any of claims 1 to 3:
wherein activation of the protection element only requires receipt of the command from the wireless receiver.

5. The device of any of claims 1 to 4:
wherein the command to activate the protection element overrides any other command received by either the wireless receiver or the controller from any other device.

6. The device of any of claims 1 to 5:
wherein the monitoring device is only embedded in the second physical structure.

7. The device of any of claims 1 to 6:
wherein the second physical structure is physically moving toward the first physical structure.

8. The device of any of claims 1 to 7:
wherein the monitoring device is configured to transmit the command only if the physical collision is certain or unavoidable.

9. The device of any of claims 1 to 8:
wherein the protection device is configured to authenticate the monitoring device before permitting the command to activate the protection element.

10. The device of claim 9:
wherein the protection device and the monitoring device are unpaired before the authenticate.

11. The device of any of claims 1 to 10:
further comprising an additional set of physical structures each having their own individual protection element;
wherein the monitoring device is configured to identify a first sub-set of the additional set of physical structures that are at risk for a physical collision with the second physical structure.

12. The device of claim 11:
wherein the monitoring device is configured to transmit the command to a second subset of the additional set of physical structures, if the sensor determines that the physical collision between the second physical structure and the second subset of the additional set of physical structures is unavoidable.

13. The device of claim 12:
wherein the command directly activates the individual protection elements of only the second subset of the additional set of physical structures.

14. The device of claim 12 or 13:
wherein the monitoring device is configured to transmit a warning to only the first physical structure and the first sub-set of the additional set of physical structures; and
wherein the second sub-set is within the first sub-set.

15. The device of any of claims 1 to 14:
wherein the first physical structure is a person; and
wherein the protection element includes an airbag coupled to the person.
